# EUROPEAN PATENT SPECIFICATION

(11) **EP 4 051 522 B1**
(45) Date of publication and mention of the grant of the patent: **03.12.2025**
(21) Application number: 19816444.4
(22) Date of filing: 31.10.2019
(51) Int. Cl.: B60K 1/04, B62J 43/16

(54) **BATTERY HOUSING AND BATTERY HOUSING MECHANISM FOR ELECTRIC AND ELECTRIC-ASSISTED VEHICLE**
BATTERIEGEHÄUSE UND BATTERIEGEHÄUSEMECHANISMUS FÜR EIN ELEKTROFAHRZEUG UND FAHRZEUG MIT ELEKTRISCHEM HILFSANTRIEB
BOÎTIER DE BATTERIE ET MÉCANISME DE BOÎTIER DE BATTERIE POUR VÉHICULE ÉLECTRIQUE ET À ASSISTANCE ÉLECTRIQUE

(43) Date of publication of application: 07.09.2022
(73) Proprietor: Zapp Electric Vehicles Limited, London NW9 6BX (GB)
(72) Inventor: CHATSUWAN, Swin, London NW9 6BX (GB); THANATHAWEE, Warin, London NW9 6BX (GB); MUNPRASIT, Namkarn, London NW9 6BX (GB)
(74) Representative: Patentanwaltskanzlei Matschnig & Forsthuber OG
(86) International application number: PCT/IB2019/059340
(87) International publication number: WO 2021/084311

(56) References cited:
- WO-A1-2014/023558
- FR-A1- 2 971 986
- US-A1- 2018 301 675

## Description

### FIELD OF INVENTION

The present invention relates to a battery housing and battery housing mechanism for an electric and electric-assisted vehicle.

### BACKGROUND OF THE INVENTION

Motor vehicles employ electricity regardless of sub-classification: four-wheelers or two-wheelers; fuel-driven, electrically-driven, or hybrid vehicles; gasoline, diesel or others, need electricity at least to a significant extent. Upgrading from more conventional and bulky lead-acid batteries, more recent models of motor vehicles have adopted the removable battery packs (RBPs). As the name suggests, these RBPs offer improvements with regard to their compactness, lightness, and removability from the vehicle in which they are installed. Advantages of RBPs include better energy concentration (i.e. regarding the space taken up by the batteries), ease of storage, vehicle maintenance, charging, and replacement. Lithium-ion batteries are one of the configurations conducive to the construction of RPBs.

In practice, the mobility promised by RBPs is much limited by the mechanisms by which the batteries are installed in, and connected electrically to, the motored vehicle. In particular, for installation of the RBP, the existing mechanisms would require the user to (i) open a battery compartment; (ii) place the RBP into the battery compartment; (iii) electrically connect the RBP to the vehicle's circuit; and (iv) close the battery compartment. For removal of the RBP, the foregoing steps are generally reversed. Steps (ii) and (iii) are particularly cumbersome and may be harmful to the battery, vehicle, or user. For example, friction and impact wear down the battery and electric connector, and sometimes cause accidents. Moreover, the RBP's installment and removal per the existing mechanisms are unwieldy, exposing the electric connectors to foreign objects, which are the major causes of battery short circuits.

Examples of said existing mechanisms include the People's Republic of China's Petty Patent Publication No. CN 208855806, which discloses a battery box containing batteries that are supported on a frame unit through a shaft. Supporting shafts are arranged on the two sides of the battery box. The battery box is supported on the frame unit through the supporting shafts in the left-right direction of the vehicle body, and the battery box is driven by an open device to rotate to an open position or a containing position in the front-back direction of the vehicle body with the supporting shafts as the rotating center.

Another example is People's Republic of China's Patent Publication No. CN108657340, which teaches a battery box connected with a stiffening plate piece. The pedal plate is locked on the stiffening plate piece. The battery box and the stiffening plate piece are pivoted on pedal tubes of the frame unit. A straightening device is arranged on the battery box. The straightening can straighten the battery box from the interior of the accommodating space. When the battery box is straightened by the straightening device, the stiffening plate piece and the pedal plate can be synchronously straightened. Document FR 2971 986 A1 discloses an electric vehicle comprising a drawer receiving batteries.

The technical concepts per both the above publications address the convenience of the battery's removal. However, such mechanisms are still not sufficient, and the need for a mechanism for installing and removing RBPs on a motor vehicle that is substantially improved in the abovementioned aspects remains unsatisfied.

An object of the present invention is to provide a mechanism for installing and removing a removable battery pack that is capable of substantially reducing the working steps, friction, and chances of impact, and thus enabling faster, more durable and safer operation of the vehicle.

### SUMMARY OF THE INVENTION

It is an objective of the present invention to provide a battery housing for electric and electric-assisted vehicles, which provide a mechanism for installing and removing a removable battery pack that is capable of substantially reducing the working steps, friction, and the chances of impact, and thus enabling faster, more durable and safer operation of the vehicle.

In order to achieve the above objective, an embodiment of the present invention provides a battery housing for an electric and electric-assisted vehicle comprising: a battery holder body including a battery receiving portion that is configured to receive a battery and being defined by a base and a plurality of walls, and an electrical connector that is configured to mate with an electrical terminal of the battery; a battery cover pivotally mounted to the battery holder body on a fulcrum, the fulcrum defining as an axis that is a center of pivoting of the battery cover; and a mechanism for removing and installing the battery comprising: a battery engaging member coupled to the battery cover and configured to slide the battery along the base to a battery retaining position in which the electrical terminal of the battery is mated with the electrical connector when the battery cover moves from an open position to a closed position, and a battery disengaging member coupled to the battery cover and configured to slide the battery along the base to a battery removal position in which the electrical terminal of the battery is disconnected from the electrical connector when the battery cover moves from the closed position to the open position.

According to the embodiment of the present invention, since the mechanism for removing and installing the battery will be simultaneously operated while the battery cover is moved from the closed position to the open position or vice versa, it is possible to reduce the working steps of removing and installing the battery from the battery housing.

The present invention will become more obvious from the following description when taken in connection with the accompanying drawings which show, for purpose of illustration only, a preferred embodiment in accordance with the present invention.

### BRIEF DESCRIPTION OF DRAWINGS

FIG. 1 is a perspective view of an electric and electric-assisted vehicle having a battery housing mounted to a vehicle frame
FIG. 2 is a perspective view of the battery housing in an open position
FIG. 3 is a top view of the battery housing in a closed position
FIG. 4 is a cross-sectional view taken along line A-A of FIG. 3 in the closed position
FIG. 5 is a cross-sectional view taken along line A-A of FIG. 3 in the open position

### DETAILED DESCTIPTION OF EMBODIMENTS OF THE INVENTION

Unless indicated otherwise, certain terminologies are used in the following description for general illustration purposes only and shall not be construed to limit the scope of the concept of the present invention in any way. Likewise, any specific configurations, figures and dimensions herein are for illustration purposes and should not be construed to limit the scope of the concept of this technical disclosure.

Unless indicated otherwise, the terminology "electric and electric-assisted vehicle" shall be inclusive of any vehicles running on two wheels that are significantly driven by electric power, irrespective of circumstantial features or specifications, such as power outputs, types of motor, or electric cell. Examples of "electric and electric-assisted vehicles" under this meaning shall include so-called electric scooters and hybrid motorcycles, among others, which may be appreciated by a person having ordinary skills in the relevant technical field.

It must be noted that as used herein and in the appended claims, the singular forms "a", "an", and "the" include plural referents unless the context clearly dictates otherwise. Thus, for example, reference to "a component" includes a plurality of components.

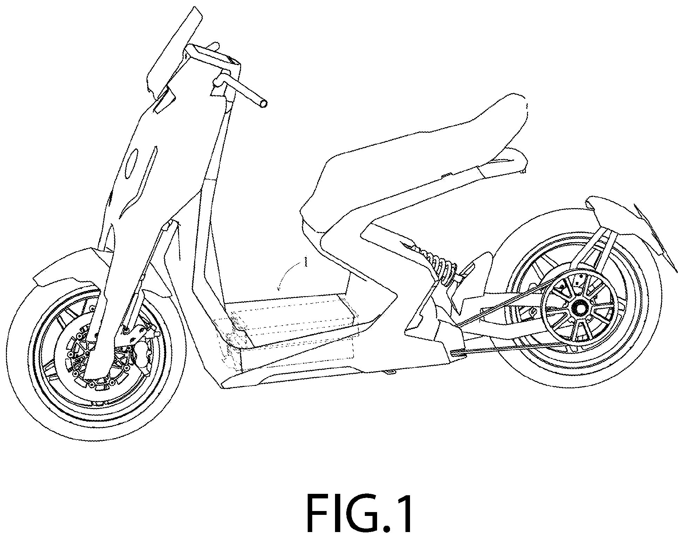

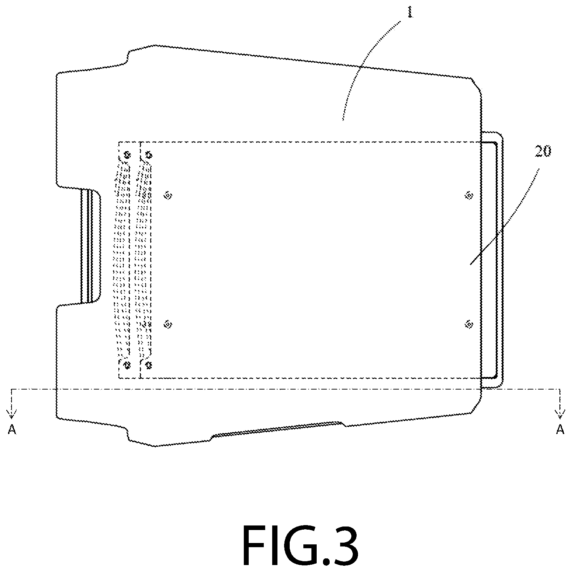

Hereinafter, an embodiment of the present invention will be described in detail with reference to FIG.1 to FIG.5.

FIG. 1 is a perspective view of an electric and electric-assisted vehicle having a battery housing 1, which is mounted to a vehicle frame. As seen in FIG. 1, the battery housing 1 is mounted to the vehicle frame of the vehicle by the means of fastening, such as a plurality of nuts and bolts. The battery housing 1 connects with a battery 20 to power the electric device, such as an electric motor to drive the electric and electric-assisted vehicle. The battery 20 in this embodiment is a rechargeable battery pack or a removable battery pack (RBP). Since the batteries are conventional components, further descriptions of the battery will not be described in detail.

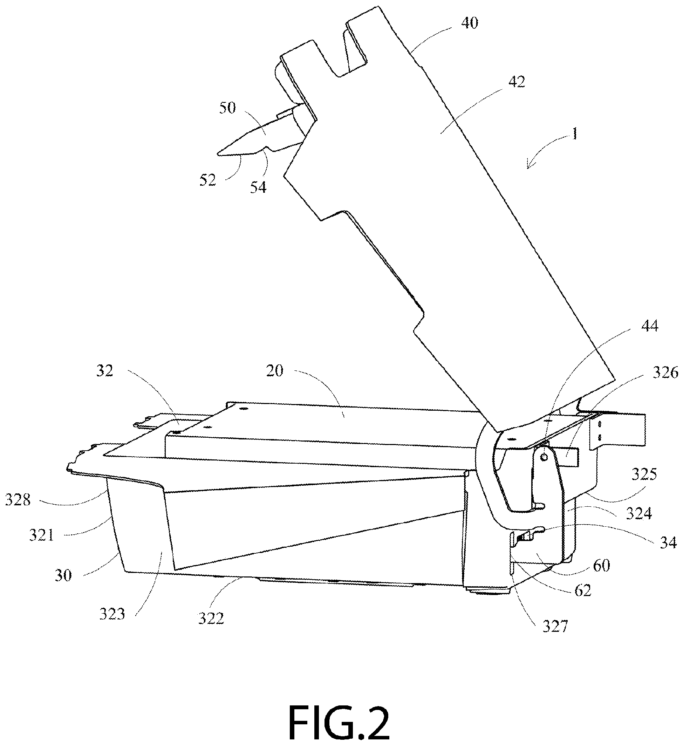

Referring to FIGS. 2 to 5, the battery housing 1 of the present invention comprises a battery holder body 30, a battery cover 40 mounted to the battery holder 30, and a battery housing mechanism which is a mechanism for removing and installing the battery 20, which includes a battery engaging member 50 and a battery disengaging member 60.

The battery holder body 30 includes a battery receiving portion 32 that is configured to receive the battery 20 and an electrical connector 34 that is configured to mate with an electrical terminal of the battery (not shown). The battery holder body 30 is a hard rigid member constructed of a lightweight material, such as hard plastic or any other suitable material,

The battery receiving portion 32 is defined by a base 322 and a plurality of walls 321. In this embodiment, the plurality of walls 321 includes two side walls 323, a front wall 328, and a back wall 324. The plurality of walls 321 is shaped to match the shape of the battery 20 and to accommodate the mechanism for removing and installing the battery 20. Therefore, the shape of the walls 321 is not limited.

For example, two battery packs 20 having a rectangular shape are accommodated in the battery receiving portion 32. The side wall 323 is a vertical wall and the height of the side wall 323 is substantially equal to the height of two battery packs 20. The length of the side wall 323 is greater than the length of the battery pack 20 so as to provide a space for allowing the battery packs 20 to move along the base 322 during the installation and removal of the battery 20 from the battery housing 1. The front wall 328 is a tilted wall, which is shaped to match the shape of the battery engaging member 50 when moving in relation to the battery cover 40. The back wall 324 has a step 325 so as to allow two battery packs 20 to overlap to each other in order to accommodate the battery disengaging member 60, which will be described in detail later. The back wall 324 further comprises at least one slot 327 for receiving the battery disengaging member 60 when the battery cover 40 is in a closed position.

In this embodiment, the electrical connector 34 is disposed on the back wall 324 at a position close to the slot 327 and a fulcrum 44 of the battery cover 40. The electric connector 34 is connected to the battery terminal of the battery 20 so that the electric power is supplied from the battery 20 to the electric devices, such as the electric motor via non-illustrated wiring. Since the precise construction of the electrical connector will vary depending on the configuration of the battery 20, the electrical connector will not be discussed in detail herein.

The battery cover 40 comprises a cover surface 42 and a handle 80 disposed on an edge of the cover surface 42. The battery cover 40 is sized to cover the battery receiving portion 32 and pivotally mounted on the battery holder body 30 on the fulcrum 44 defined as an axis that is a center of the pivoting of the battery cover 40. The fulcrum 44 is provided on the back wall 324 and above the slot 327. More specifically, the fulcrum 44 is provided on a connecting portion 326 protruding from the back wall 324. The cover surface 42 may be formed as one piece or a plurality of pieces being connected to each other. Preferably, the handle 80 is provided on an edge of the cover surface 42 located between the battery engaging member 50 and the battery disengaging member 60. The handle 80 is provided for the ease of open and closing the battery cover 40. Therefore, the shape of the handle 80 is not limited.

Now the mechanism for removing and installing the battery 20 will be discussed in more detail. The mechanism for removing and installing the battery 20 comprises the battery engaging member 50 and the battery disengaging member 60. In the closed position, the battery cover 40 positions the battery engaging member 50 relative to the battery holder body 30, such that the battery 20 can be attached to the battery holder body 30. In the open position, the battery cover 40 positions the battery disengaging member 60 relative to the battery holder body 30 such that the battery 20 can be removed from the battery holder body 30.

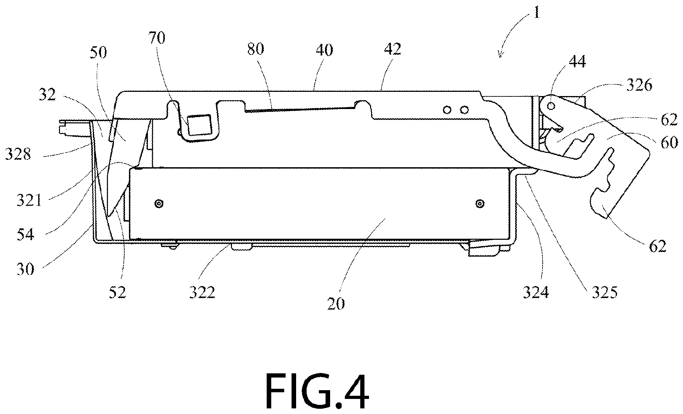

The battery engaging member 50 is coupled to the battery cover 40 and shaped to allow the battery 20 to be fixed at the battery retaining position when the battery cover 40 is at the closed position as seen in FIG. 4. More specifically, the battery engaging member 50 is firmly fixed to the battery cover 40 and extended from the edge of battery cover 40. The battery engaging member 50 is a hard rigid member that is preferably formed of a lightweight metal material, such as aluminum and/or hard plastic.

The battery engaging member 50 comprises a contact surface 52, which is tilted to accommodate the front wall 328 and the battery 20 when the battery cover 40 moves from the open position to the closed position. With this arrangement, the contact surface 52 of the battery engaging member 50 will contact the battery 20, such that the battery 20 is slid along the base 322 to a battery retaining position in which the electrical terminal of the battery 20 is mated with the electrical connector 34 when the battery cover 40 moves from the open position to the closed position.

The contact surface 52 further comprises a recessed portion 54 being shaped to receive an edge of the battery 20 to fix the battery 20 at the battery retaining position when the battery cover 40 is at the closed position. More specifically, each recessed portion 54 is shaped to receive each edge of the battery 20 located below the top battery 20. With this arrangement, the size of the battery holder body 30 can be minimized as the space required for the movement of the battery engaging member 50 between the front wall 328 and the battery 20, when the battery cover 40 moves from the open position to the closed position, is reduced.

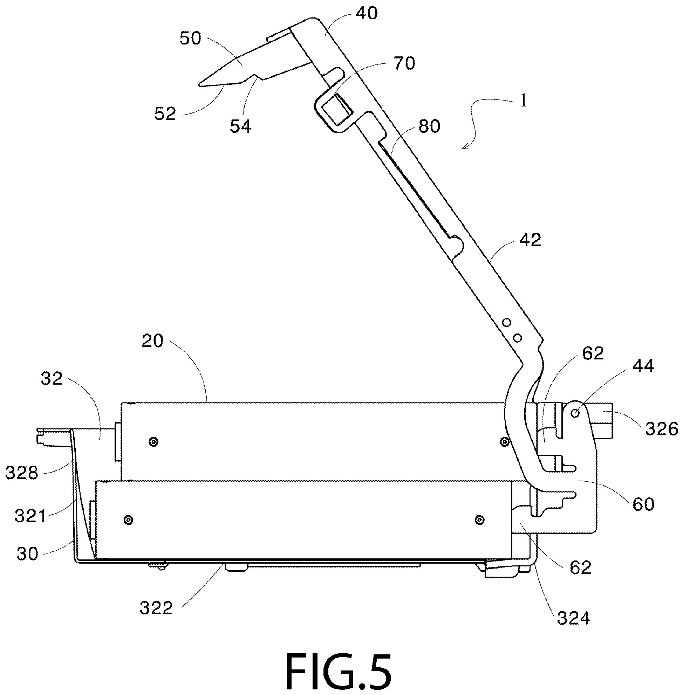

As seen in FIG. 5, the battery disengaging member 60 is coupled to the battery cover 40 and configured to slide the battery 20 along the base 322 to a battery removal position in which the electrical terminal of the battery 20 is disconnected from the electrical connector 34 when the battery cover 40 moves from the closed position to the open position. The battery disengaging member 60 shares the fulcrum 44 with the battery cover 40 such that the battery disengaging member 60 pivotally moves when the battery cover 40 moves from the closed position to the open position so as to slide the battery 20 along the base 322 to the battery removal position. The battery disengaging member 60 is a hard rigid member that is preferably formed of a lightweight metal material such as aluminum and/or hard plastic.

More specifically, the battery disengaging member 60 comprises at least one protrusion 62, which is received in the slot 327 such that the at least one protrusion 62 push the battery 20 to the battery removal position when the battery cover 40 moves from the closed position to the open position. In this embodiment, the battery disengaging member 60 includes two protrusions 62 to be received in two slots 327, where each is provided for sliding each battery 20 along the base 322 to the battery removal position. The protrusion 62 will be chamfered at the edge in contact with the battery 20 so as to avoid scratching the battery 20 as a result of friction from the movement of the protrusion 62 relative to the battery 20.

Moreover, the battery housing 1 further comprises a locking mechanism 70 configured to lock the battery cover 40 to the battery holder body 30 such that the battery 20 is secured in the battery housing 1. Since the locking mechanism 70 is a conventional component, further description of the locking mechanism 70 will not be described in detail.

### Example

The battery housing 1 for accommodating with two batteries 20, which a dimension of each battery is 330 mm by 220 mm by 62 mm, can be shaped as described hereinafter. However, the shape is not limited to this dimension.

The width of the step 325 of the back wall 324 is 33.50 mm. The contact surface 52 of the battery engaging member 50 is tilted at a degree ranges from 15° to 30° with respect to the vertical axis and the battery disengaging member 60 is disposed at a degree of 55° with respect to the vertical axis.

Next, the method of removing and installing the battery 20 will be provided.

For the method of removing the battery 20 from the battery housing 1, the user will move the battery cover 40 by lifting the handle 80 from the closed position to the open position. Thus, the battery disengaging member 60 pivots relative to the battery cover 40 on the fulcrum 44 and the protrusion 62 is received in the slot 327 of the back wall 324 so as to slide the battery 20 along the base to a battery removal position in which the electrical terminal of the battery 20 is disconnected from the electrical connector 34. Then, the user can take the battery 20 out of the battery housing 1.

For the method of installing the battery 20 in the battery housing 1, the user will place the battery 20 in the battery receiving portion 32. Then, the user will move the battery cover 40 by moving the handle 80 from the open position to the closed position. Thus, the battery engaging member 50 slides the battery 20 along the base 322 to a battery retaining position in which the electrical terminal of the battery 20 is mated with the electrical connector 34.

With this arrangement, removing and installing the battery 20 from the battery housing 1 is easy and convenient as the user does not need any tools and the working steps can be reduced. The battery 20 will be removed from the battery to recharge by applying the electric current from the charging point or installed into the battery housing 1 simultaneously while the battery cover 40 is moved from the closed position to the open position or vice versa. Thus, enabling a faster, more durable and safer operation of the vehicle.

While this invention has been described in conjunction with the examples of embodiments outlined above, it is defined ony by the scope of the protection of the appended claims. Various alternatives, modifications, variations and improvements may be made within the scope of the invention.

Accordingly, the examples of embodiments of the invention, as set forth above, are intended to be illustrative, not limiting.

### List of reference:

1 vehicle
1 battery housing for an electric and electric-assisted vehicle
20 battery
30 battery holder body
32 battery receiving portion
321 wall
322 base
323 side wall
324 back wall
325 step
326 connecting portion
327 slot
328 front wall
34 electrical connector
40 battery cover
42 cover surface
44 fulcrum
50 battery engaging member
52 contact surface
54 recessed portion
60 battery disengaging member
62 protrusion
70 locking mechanism
80 handle

## Claims

1. A battery housing (1) for an electric and electric-assisted vehicle comprising:
a battery holder body (30) including a battery receiving portion (32) that is configured to receive a battery (20) and being defined by a base and a plurality of walls, and an electrical connector that is configured to mate with an electrical terminal of the battery (20);
a battery cover (40) pivotally mounted to the battery holder body (30) on a fulcrum, the fulcrum being defined as an axis that is a center of the pivoting of the battery cover (40); and
a mechanism for removing and installing the battery comprising:
a battery engaging member (50) coupled to the battery cover (40) and configured to slide the battery along the base to a battery retaining position in which the electrical terminal of the battery (20) is mated with the electrical connector when the battery cover (40) moves from an open position to a closed position; and
a battery disengaging member (60) coupled to the battery cover (40) and configured to slide the battery (20) along the base to a battery removal position in which the electrical terminal of the battery (20) is disconnected from the electrical connector when the battery cover (40) moves from the closed position to the open position,
**characterized in that**
the battery engaging member (50) extends from the battery cover (40), the battery engaging member (50) comprising a contact surface (52) being tilted configured to slide the battery along the base when the battery cover (40) moves from the open position to the closed position and to fix the battery (20) at the battery retaining position when the battery cover (40) is at the closed position, and
the contact surface (52) further comprises a recessed portion (54) being shaped to receive an edge of the battery (20) to fix the battery (20) at the battery retaining position when the battery cover (40) is at the closed position.

2. The battery housing (1) for the electric and electric-assisted vehicle according to claim 1, wherein the battery disengaging member (60) shares the fulcrum with the battery cover (40) such that the battery disengaging member (60) pivotally moves when the battery cover (40) moves from the closed position to the open position so as to slide the battery along the base to the battery removal position.

3. The battery housing (1) for the electric and electric-assisted vehicle according to claim 2, wherein the battery disengaging member (60) comprises at least one protrusion and the plurality of walls comprises a back wall disposing the fulcrum, the back wall comprises at least one slot in which the at least one protrusion is received such that the at least one protrusion push the battery (20) to the battery removal position when the battery cover (40) moves from the closed position to the open position.

4. The battery housing (1) for the electric and electric-assisted vehicle according to any one of the preceding claims, wherein the battery cover (40) further comprises a cover surface (42) and a handle disposed on an edge of the cover surface (42).

5. The battery housing (1) for the electric and electric-assisted vehicle according to any one of the preceding claims, wherein the battery housing further comprises a locking mechanism configured to lock the battery cover (40).

## Patentansprüche

1. Batteriegehäuse (1) für ein elektrisches und elektrisch unterstütztes Fahrzeug, aufweisend:
einen Batteriehalterkörper (30), beinhaltend einen Batterieaufnahmeabschnitt (32), der zur Aufnahme einer Batterie (20) eingerichtet und durch eine Basis und eine Vielzahl von Wänden definiert ist, und ein elektrisches Anschlussstück, das mit einem elektrischen Anschluss der Batterie (20) zusammenpassend ausgebildet ist;
eine Batterieabdeckung (40), die schwenkbar an dem Batteriehalterkörper (30) an einer Drehstelle angebracht ist, wobei die Drehstelle definiert ist als eine Achse, die ein Zentrum der Schwenkbewegung der Batterieabdeckung (40) ist; und
einen Mechanismus zum Entnehmen und Installieren der Batterie, aufweisend:
ein Batterieeinsetzelement (50), das an der Batterieabdeckung (40) angekoppelt ist und dazu eingerichtet ist, die Batterie entlang der Basis in eine Batteriehaltestellung, in der der elektrische Anschluss der Batterie (20) mit dem elektrischen Anschlussstück zusammengefügt ist, zu schieben, wenn die Batterieabdeckung (40) von einer offenen Stellung in eine geschlossene Stellung bewegt wird; und
ein Batterielöseelement (60), das an der Batterieabdeckung (40) angekoppelt ist und dazu eingerichtet ist, die Batterie (20) entlang der Basis in eine Batterieentnahmestellung, in der der elektrische Anschluss der Batterie (20) von dem elektrischen Anschlussstück getrennt ist, zu schieben, wenn sich die Batterieabdeckung (40) von der geschlossenen Stellung in die offene Stellung bewegt,
**dadurch gekennzeichnet, dass**
sich das Batterieeinsetzelement (50) von der Batterieabdeckung (40) aus erstreckt, wobei das Batterieeinsetzelement (50) eine Kontaktfläche (52) aufweist, die geneigt zum Schieben der Batterie entlang der Basis ausgebildet ist, wenn die Batterieabdeckung (40) von der offenen Stellung in die geschlossene Stellung bewegt wird, und zum Festhalten der Batterie (20) in der Batteriehaltestellung, wenn sich die Batterieabdeckung (40) in der geschlossenen Stellung befindet, und
die Kontaktfläche (52) zudem einen vertieften Teilbereich (54) aufweist, der zum Aufnehmen einer Kante der Batterie (20) gestaltet ist, zum Festhalten der Batterie (20) in der Batteriehaltestellung, wenn sich die Batterieabdeckung (40) in der geschlossenen Stellung befindet.

2. Batteriegehäuse (1) für das elektrische und elektrisch unterstützte Fahrzeug nach Anspruch 1, wobei das Batterielöseelement (60) die Drehstelle mit der Batterieabdeckung (40) gemeinsam hat, so dass sich das Batterielöseelement (60) schwenkend bewegt, wenn die Batterieabdeckung (40) von der geschlossenen Stellung in die offene Stellung bewegt wird, um die Batterie entlang der Basis in die Batterieentnahmestellung zu schieben.

3. Batteriegehäuse (1) für das elektrische und elektrisch unterstützte Fahrzeug nach Anspruch 2, wobei das Batterielöseelement (60) zumindest einen Vorsprung aufweist und die Vielzahl von Wänden eine Rückwand beinhaltet, die über die Drehstelle verfügt, wobei die Rückwand zumindest eine Nische aufweist, in der der zumindest eine Vorsprung so aufgenommen wird, dass der zumindest eine Vorsprung die Batterie (20) in die Batterieentnahmestellung schiebt, wenn sich die Batterieabdeckung (40) von der geschlossenen Stellung in die offene Stellung bewegt.

4. Batteriegehäuse (1) für das elektrische und elektrisch unterstützte Fahrzeug nach einem der vorhergehenden Ansprüche, wobei die Batterieabdeckung (40) zudem eine Abdeckfläche (42) und einen an einem Rand der Abdeckfläche (42) angeordneten Griff aufweist.

5. Batteriegehäuse (1) für das elektrische und elektrisch unterstützte Fahrzeug nach einem der vorangehenden Ansprüche, wobei das Batteriegehäuse zudem einen Verriegelungsmechanismus zum Verriegeln der Batterieabdeckung (40) aufweist.

## Revendications

1. Boîtier de batterie (1) pour un véhicule électrique et électriquement assisté comprenant :
un corps de support de batterie (30) incluant une partie de réception de batterie (32), configurée pour recevoir une batterie (20) et définie par une base et une pluralité de parois, et un connecteur électrique configuré pour s'accoupler avec une borne électrique de la batterie (20) ;
un couvercle de batterie (40) monté pivotant sur le corps de support de batterie (30) sur un point d'appui, le point d'appui étant défini comme un axe qui est un centre de pivotement du couvercle de batterie (40) ; et
un mécanisme pour retirer et installer la batterie comportant :
un élément d'engagement de la batterie (50) couplé au couvercle de la batterie (40) et configuré pour faire glisser la batterie le long de la base jusqu'à une position de retenue de la batterie dans laquelle la borne électrique de la batterie (20) est accouplée avec le connecteur électrique lorsque le couvercle de la batterie (40) passe d'une position ouverte à une position fermée ; et
un élément de désengagement de la batterie (60) couplé au couvercle de la batterie (40) et configuré pour faire glisser la batterie (20) le long de la base jusqu'à une position de retrait de la batterie dans laquelle la borne électrique de la batterie (20) est déconnectée du connecteur électrique lorsque le couvercle de la batterie (40) passe de la position fermée à la position ouverte,
**caractérisé en ce que**
l'élément d'engagement de la batterie (50) s'étend à partir du couvercle de la batterie (40), l'élément d'engagement de la batterie (50) comprenant une surface de contact (52) inclinée configurée pour faire glisser la batterie le long de la base lorsque le couvercle de la batterie (40) passe de la position ouverte à la position fermée et pour fixer la batterie (20) à la position de retenue de la batterie lorsque le couvercle de la batterie (40) est à la position fermée, et
la surface de contact (52) comprend en outre une partie enfoncée (54) formée pour recevoir un bord de la batterie (20) afin de fixer la batterie (20) à la position de retenue de la batterie lorsque le couvercle de la batterie (40) est en position fermée.

2. Boîtier de batterie (1) pour le véhicule électrique et électriquement assisté selon la revendication 1, dans lequel l'élément de désengagement de la batterie (60) partage le point d'appui avec le couvercle de la batterie (40) de sorte que l'élément de désengagement de la batterie (60) se déplace de manière pivotante lorsque le couvercle de la batterie (40) passe de la position fermée à la position ouverte de manière à faire glisser la batterie le long de la base jusqu'à la position d'enlèvement de la batterie.

3. Boîtier de batterie (1) pour le véhicule électrique et électriquement assisté selon la revendication 2, dans lequel l'élément de désengagement de la batterie (60) comprend au moins une protubérance et la pluralité de parois comprend une paroi arrière disposant du point d'appui, la paroi arrière comprend au moins une fente dans laquelle ladite au moins une protubérance est reçue de telle sorte que ladite au moins une protubérance pousse la batterie (20) vers la position de retrait de la batterie lorsque le couvercle de la batterie (40) se déplace de la position fermée à la position ouverte.

4. Boîtier de batterie (1) pour le véhicule électrique et électriquement assisté selon l'une quelconque des revendications précédentes, dans lequel le couvercle de batterie (40) comprend en outre une surface de couverture (42) et une poignée disposée sur un bord de la surface de couverture (42).

5. Boîtier de batterie (1) pour le véhicule électrique et électriquement assisté selon l'une quelconque des revendications précédentes, dans lequel le boîtier de batterie comprend en outre un mécanisme de verrouillage configuré pour verrouiller le couvercle de batterie (40).
